(19) Europäisches Patentamt

European Patent Office

Office européen des brevets

(11) Publication number: **0 226 808**
**A2**

(12) # EUROPEAN PATENT APPLICATION

(21) Application number: **86115850.9**

(22) Date of filing: **14.11.86**

(51) Int. Cl.⁴: **G05B 19/405**

(30) Priority: **15.11.85 JP 254885/85**

(43) Date of publication of application:
**01.07.87 Bulletin 87/27**

(84) Designated Contracting States:
**CH DE FR GB IT LI NL**

(71) Applicant: **KITAMURA MACHINERY CO.,LTD.**
**1870 Toide-Komyoji**
**Takaoka-shi Toyama-ken(JP)**

(72) Inventor: **Kitamura, Koichiro**
**3-11-5 Ekinan**
**Takaoka-shi Toyama-ken(JP)**

(74) Representative: **Patentanwälte Ruff und Beier**
**Neckarstrasse 50**
**D-7000 Stuttgart 1(DE)**

(54) **Machine tool.**

(57) A machine tool includes a machine body (3) having a base (6), a first table (7) and a second table (8), the first table (7) moving along the second table (8), the second table (8) moving along the base (6), a CNC means (4) for controlling the machine body - (3), an operator control panel (5) separate from the machine body (3), and an optical fiber cable means - (35, 37, 57) for optically connecting the operator control panel (5) to the CNC means (4).

EP 0 226 808 A2

## MACHINE TOOL

### BACKGROUND OF THE INVENTION

This invention relates to an improved machine tool.

In machine tools which are controlled by CNC - (Computer Numerical Control) means, an operator control panel is separate from a machine body and connected to the CNC means and sequence control means for controlling the machine body by way of an electric cable or cables. Many operator control buttons and switches are provided on the operator control panel.

Usually, the number of electric cables must be equal to the total number of the operator control members. Therefore, in the prior art, an electric cable bundle is very thick and heavy if all electric cables are set in it.

The operator control panel is preferably remote from the machine body in order to prevent the operator control panel from becoming dirty and damaged.

In case of a large machine tool, it is not easy to move the operator control panel to such a position that an operator can easily operate it.

### SUMMARY OF THE INVENTION

It is the object of the invention to provide a machine tool which can be easily moved to a desired position.

According to this invention, a machine tool is equipped with an operator control panel connected by way of an optical fiber cable means to CNC means for controlling a machine body so that signals are sent through the optical fiber cable means between the operator control panel and the CNC means.

### BRIEF DESCRIPTION OF THE DRAWINGS

Fig. I is a front view showing a machine tool according to this invention;

Fig. 2 is a side view showing the machine tool shown in Fig. I;

Fig. 3 is an explanatory view showing a condition in which signals are sent by way of an optical fiber cable between an operator control panel and a control means for controlling a machine body; and

Fig. 4 is a further explanatory view showing a condition in which signals are sent by way of an optical fiber cable between an operator control panel and CNC means.

### DESCRIPTION OF THE PREFERRED EMBODIMENT

Referring to Figs. I and 2, a machine tool 2 has a machine body 3, a CNC means 4 and an operator control panel 5.

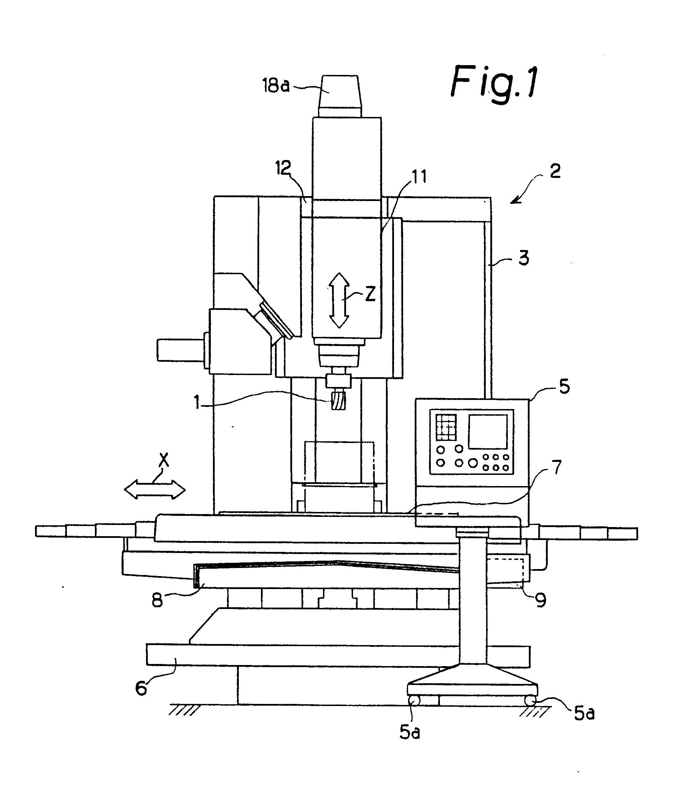

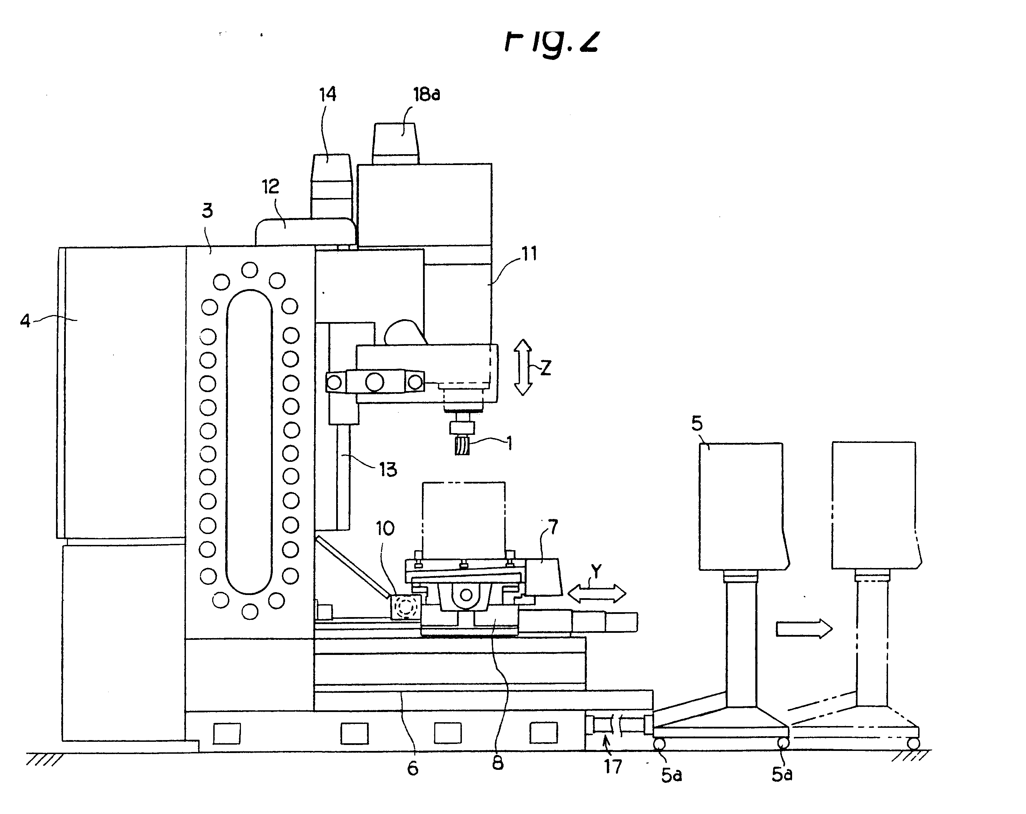

The machine body 3 is a vertical machining center equipped with a tool I. A first table 7 and a second table 8 are set on a base 6 of the machine body 3. The first table 7 can move along the second table 8 by means of a servomotor 9 in the direction of arrow X shown in Fig. I. The second table 8 can move along the base 6 by means of a servomotor I0 in the direction of arrow Y shown in Fig. 2. A spindle head I of the machine body 3 can move along a rail I3 of a column I2 by means of a servomotor I4 in the direction of arrow Z shown in Fig. 2.

The operator control panel 5 has four casters 5a at four corners of its bottom portion.

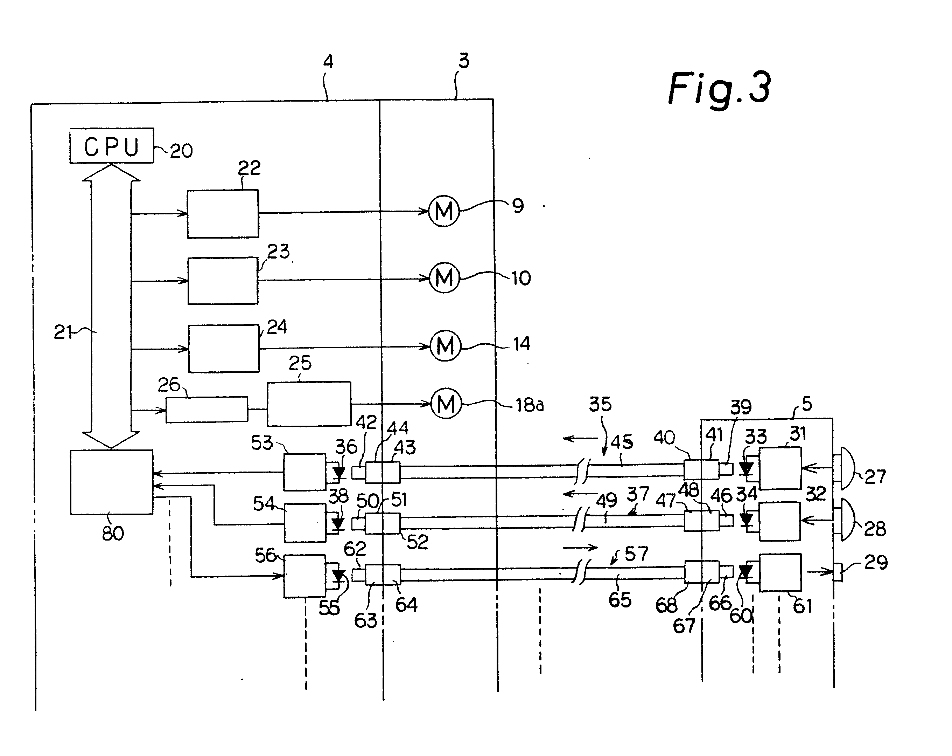

As shown in Fig. 3, the CNC means 4 is equipped with a central processing unit (CPU) 20 to which servo control means 22 through 24 are connected by way of an address-data bus 2I. Plural servomotors 9, I0, I4 are controlled by the servo control means 22, 23, 24, respectively, according to control signals from the CPU 20. Sequence control means 25 is connected by way of an interface 26 to the address-data bus 2I. A main motor I8a is controlled by the sequence control means 25 according to control signals from the CPU 20.

The operator control panel 5 has a start button 27, an emergency stop button 28 and other operator control members such as a CNC automatic indicater lamp 29 and plural circuit changing switches which are not shown in the drawings.

If the start button 27 is pushed, an electrical signal is sent into a driving circuit 3I in the operator control panel 5. If the emergency stop button 28 is pushed, an electrical signal is sent into a driving circuit 32 in the operator control panel 5. Upon receipt of such electrical signals, the driving circuits 3I, 32 can force light emitting elements 33, 34 to emit light, respectively.

The light signals are sent from the light emitting element 33 to a light receiving element 36 by way of an optical fiber cable 35. Also, the light signals are sent from the light emitting element 34 to a light receiving element 38 by way of an optical fiber cable 37.

One end of an optical fiber 39 faces the light emitting element 33 in the operator control panel 5. The other end of the optical fiber 39 is connected to one end of an optical fiber 45 by way of optical connectors 41 and 41 for the operator control panel 5. One end of an optical fiber 42 is connected to the other end of the optical fiber 45 by way of optical connectors 43, 44 for the CNC means 4. The other end of the optical fiber 42 faces the light receiving element 36 in the CNC means 4.

Also, one end of the optical fiber 46 faces the light receiving element 34 in the operator control panel 5. The other end of the optical fiber 46 is connected to one end of an optical fiber 49 by way of optical connectors 47, 48 for the operator control panel 5. One end of an optical fiber 50 is connected to the other end of the optical fiber 49 by way of optical connectors 51, 52 for the CNC means 4. The other end of the optical fiber 50 faces the light receiving element 38 within the CNC means 4.

If the start button 27 is pushed, a light signal is sent to the light receiving element 36, and then a receiving circuit 53 is actuated so as to send an electrical signal into an input-output circuit 80. According to this electrical signal, the input-output circuit 80 can send an input signal to the CPU 20 by way of the address-data bus 21. According to this input signal, the CPU 20 forces the servo control means 22, 23, 24 to control the servomotors 9, 10, 14. As a result, the CPU 20 controls the sequence control means 25 in such a way that the main motor 18a begins to rotate.

If the emergency stop button 28 is pushed, the light receiving element 38 receives a light signal, and the receiving circuit 54 is actuated so as to send an electrical signal to the input-output circuit 80. According to this electrical signal, the input-output circuit 80 sends an input signal to the CPU 20 by way of the address-data bus 21. According to this input signal, the CPU 20 commands the servo control means 22, 23, 24 and the sequence control means 25 to stop rotation of the servomotors 22, 23, 24 and the main motor 18a.

The driving circuit 56 for the light emitting element 55 is connected to the address-data bus 21 for the CPU 20.

When the servomotors 9, 10, 14 for the machine body 3 begin to rotate, a signal from the CPU 20 is sent by way of the address-data bus 21 to the input-output circuit 80 according to this signal, and a driving signal is sent from the input-output circuit 80 to the driving circuit 56 so that the light emitting element 55 may emit light.

A light signal is sent from the light emitting element 55 to the light receiving element 60 by way of an optical fiber cable 57.

The structure of the optical fiber cable 57 is substantially the same as that of the optical fiber cables 35, 37. For example, one end of an optical fiber 62 faces the light emitting element 55 in the CNC means 4. The other end of the optical fiber 62 is connected to one end of an optical fiber 65 by way of optical connectors 63, 64 for the CNC means 4. One end of the optical fiber 66 is connected to the other end of the optical fiber 65 by way of optical connectors 67, 68 for the operator control panel 5. The other end of the optical fiber 66 faces the light emitting element 60 in the operator control panel 5.

If the light receiving element 60 receives light, a receiving circuit 61 is actuated thereby to switch on the CNC automatic operation indicator lamp 29.

The optical fiber cables 35, 37 and plural electrical fibers (not shown) for the operator control panel 5 are combined so as to constitute a cable bundle 17 as shown in Fig. 2. This cable bundle 17 has a length sufficient to easily move the operator control panel 5 to a desired position for operation.

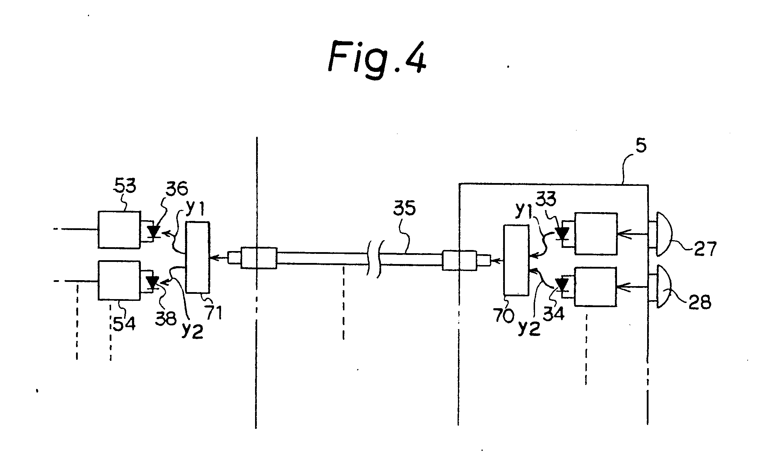

Fig. 4 shows a further embodiment of this invention. A composite wave element 70 is placed before the light emitting element 33 and 34. The light signals from the light emitting elements 33, 34 have different wave lengths y1 and y2, respectively. A distributive wave element 71 is placed before the light receiving elements 36, 38. The light receiving elements 36, 38 receive the light signals of the different light waves y1 and y2, respectively. According to a light wave dividing multi-transmission system, the light signals having plural different light waves are multified and then sent through the optical fiber cable 35. Only a single optical fiber cable can be used because the light signals of light waves y1, y2 are composed in the composite wave element 70 and then sent through the optical fiber cable 35 to the distributive wave element 71 in which the composed light signal is divided to two light signals of light waves y1, y2 and then received by the light receiving elements 36, 38. A preferred example of the composite wave element 70 and the distributive element 71 is a prism.

The above-mentioned light wave dividing multi-transmission system can be applied to an optical fiber cable means between the CNC means 4 and the operator control panel 5.

In the embdiment shown in Fig. 3, only typical indicator lamps and operator control buttons are shown in the operator control panel, and other buttons and switches are not shown although they are optically connected to the CNC means by way of the optical fiber cable means.

The optical fibers can be made of a conventinal plastic material or a conventional glass.

One preferred example of the light receiving element is a photo diode. A preferred example of the light emitting element is a light emitting diode - (LED).

According to this invention, all control signals can be sent between the operator control panel 5 and the CNC means 4 by way of the optical fiber cable means which can be made light and thin. Therefore, the operator control panel 5 can be easily moved to any desired position for operation by an operator.

## Claims

I. A machine tool comprising a machine body - (3) having a base (6), a first table (7) and a second table (8), the first table (7) moving along the second table (8), the second table (8) moving along the base (6), a CNC means (4) for cntrolling the machine body (3), an operator control panel (5) separate from the machine body (3), and an optical fiber cable means (35, 37, 57) for optically connecting the operator control panel (5) to the CNC means (4).

2. A machine tool as claimed in Claim I, wherein the optical fiber cable means (35, 37, 57) includes three optical fiber cables (35, 37, 57) each connected to the CNC means (4) and the operator control panel (5) by way of optical connectors (40, 4I, 43, 44, 47, 48, 5I, 52, 63, 64, 67, 68).

3. A machine tool as claimed in Claim 2, wherein the optical fiber cables (35, 37, 57) are combined thereby to constitute a single cable bundle (I7).

4. A machine tool as claimed in Claim I, wherein plural casters (5a) are attached to a bottom portion of the operator control panel (5).

5. A machine tool as claimed in Claim 2, wherein plural casters (5a) are attached to a bottom portion of the operator control panel (5).

6. A machine tool as claimed in Claim 3, wherein plural casters (5a) are attached to a bottom portion of the operator control panel (5).

*Fig.1*

Fig.2

0 226 808

Fig.3

0 226 808

# Fig.4